# EUROPEAN PATENT APPLICATION

(11) **EP 2 033 718 A2**
(43) Date of publication of application: **11.03.2009**
(21) Application number: 08252977.7
(22) Date of filing: 08.09.2008
(51) Int. Cl.: B08B 3/02, B05B 1/16

(54) **Pressure washer system**

(30) Priority: 10.09.2007 US 971172 P; 10.09.2007 US 971168 P
(71) Applicant: Techtronic Industries Company Limited, Tsuen Wan New Territories Hong Kong (CN)
(72) Inventor: Gardner, Michael R., Anderson SC 29621 (US); Long, Charles Keith, Seneca SC 29677 (US); Hahn, Klaus Karl, Braselton GA 30517 (US); Jerabek, Jesse J., Anderson SC 29621 (US)
(74) Representative: Martin, David John

(57) **Abstract**

A spray apparatus for a pressure washer includes an adaptor (180) configured to receive a flow of pressurized fluid through a conduit fluidly connected with a pressure washer. A multi-position valve (185) is movably connected with the adaptor and positionable in a plurality of discrete positions. The valve position is modified with an operator engaged with the valve (185). A first output (192) and a second output (194) are defined within the adaptor (180), wherein the valve (185) is rotatable to selectively allow the pressurized fluid to flow through one of the first (192) or the second (194) output.

## Description

### CROSS-REFERENCE TO RELATED APPLICATIONS

This application claims priority from United States Provisional Application No. 60/971,172, filed on September 10, 2007, titled "Multi-Position Valve for Pressure Washer" and from United States Provisional Application No. 60/971,168, filed on September 10, 2007, titled "Universal Connector System for Pressure Washer," the entirety of which are each hereby incorporated by reference herein.

### TECHNICAL BACKGROUND

Pressure washers are often used to provide a substantially constant flow of liquid at an increased pressure to a work surface or object for cleaning of that surface or object. Pressure washers often include a pump for increasing the pressure of liquid provided therefrom, a path for flowing from the pump, and a wand or similar structure that can be held by the user to direct the relatively high pressure flow to the object or surface to be cleaned.

In addition to providing a flow of relatively high pressure liquid, pressure washers often provide a mechanism or structure to selectively entrain cleaning fluid with the fluid flowing from the pump. Further, wands used with pressure washers may be connectable with nozzles that provide a spray flow in a specific pattern or that adjust the output pressure of the spray flow, or may be connectable with a brush that allows for selective mechanical agitation of the surface to be cleaned along with the flow of high pressure liquid.

To perform a single cleaning task using a pressure washer, the user is often forced to reconfigure the pressure washer multiple times to compete all of the necessary steps of a task. For example, when washing a vehicle, a user normally initially provides an initial flow of clean water to remove external debris, a flow of soapy water to the vehicle, a brush to mechanically agitate the surfaces of the vehicle to remove additional dirt or debris, and a flow of clean water to rinse the soapy water and the dirt from the vehicle.

Each of these tasks requires a different orientation of a conventional pressure washer system. For example, a first nozzle may be provided on the wand to provide the flow of clean water, a different nozzle provided on the wand to reduce the pressure of the fluid to entrain a sufficient amount of soapy water with the fluid flow from the pump, and a brush on the wand (with the nozzles removed) to mechanically agitate the surfaces to be cleaned. The cyclic requirement to modify the pressure washer system dependant on the desired task requires additional time to perform the task and decreases the efficiency of the task and increases the number of cycles that the components are attached to and removed from the wand.

There are two power sources commonly used to provide motive force to operate a pump within the pressure washer used to increase the pressure of the fluid leaving the pressure washer. Some pressure washers include internal combustion engines that burn gasoline, and connect the pump with the output shaft of the engine to provide the motive force to operate the pump. Gas powered pressure washers are typically capable of producing relatively high pressure fluid at the output of the pressure washer. Because gas pressure washers produce relatively high pressure fluid, the structure used to direct the fluid from the pressure washer output to the surface to be cleaned must be capable of withstanding the relatively high temperatures without substantial leakage or failure.

An alternative to the gas powered pressure washers are electric pressure washers, which may use either alternating or direct current. The pumps for electrical pressure washers normally produce lower pressures due to the lower power motors possible with electric pressure washers due to the relatively low input voltage. Because electric pressure washers produce lower pressure fluid, the design parameters for structure used to direct fluid from the pressure washer output (such as hoses, wands, and nozzles) to the surface to be cleaned are more forgiving than with gas pressure washers.

Because the downstream structure for both gas and electric pressure washers must withstand different maximum pressure ranges, wands suitable for both types of pressure washers are normally made with different materials and different types of connectors. Wands for use with gas pressure washers typically are metal and include quick connect couplers. In contrast, wands for use with electric pressure washers are often made from plastic and include threaded connectors or other similar types of simpler connection devices. Because wands for gas and electric pressure washers are constructed differently, nozzles and other fluid output devices are additionally made with different materials and designs, such that components for one type of pressure washer (i.e. gas or electric) are not usable with the other type of pressure washer.

### BRIEF SUMMARY

In a first aspect, the invention proposes a spray apparatus for a pressure washer comprising an adaptor having an input to receive a flow of pressurized fluid through a conduit fluidly connected with a pressure washer and a first output and a second output from which the fluid exits the adaptor; and a multi-position valve movably connected with the adaptor and positionable in a plurality of discrete positions, wherein the valve is selectively positioned to direct the pressurized fluid to flow through one of the first or the second output.

The pressurized fluid may be received at the input of the adaptor at a pressure dependent on the position of the valve.

Furthermore, the spray apparatus may further comprise a source of cleaning solution fluidly connected with the conduit and configured to selectively mix with the flow of pressurized fluid depending on the position of the valve.

Furthermore, the spray apparatus may further comprise a venturi fluidly connecting the flow of pressurized fluid with the source of cleaning solution.

Furthermore, the valve may be a four position valve, and the valve being movable to a first position significantly impeding a flow of pressurized fluid therethrough.

Furthermore, the pressure of the fluid flowing through the adaptor may be above a threshold pressure when the valve is in the first position. The adaptor may be configured to allow flow through the first output when the valve is in the first position. Furthermore, the valve may be movable to a second position substantially allowing the flow of pressurized fluid therethrough. Furthermore, the pressure of the fluid flowing through the adaptor may be below a threshold pressure when the valve is in the second position. Furthermore, the valve may be movable to a third position substantially allowing flow of pressurized fluid through the adapter and the second output. Furthermore, the valve may be movable to a fourth position substantially allowing flow of pressurized fluid through the adaptor and through the second output. Furthermore, the second output may be configured to receive a cleaning tool.

In a second aspect, the invention proposes a spray apparatus for a pressure washer comprising a source of pressurized fluid, a valve fluidly connected to a conduit for receiving the source of pressurized fluid, a first output fluidly connectable with the pressurized fluid, a second output fluidly connectable with the pressurized fluid, wherein the second output is operable with a cleaning tool, and wherein the valve is configured to be switched between a first position where the pressurized fluid flows through the first output and to a second position where the pressurized fluid flows through the second output.

The valve may be configured to adjust the pressure of the pressurized fluid flowing through the conduit between a relatively high pressure above a threshold pressure and a relatively low pressure below the threshold pressure.

The spray apparatus may further comprise a source of cleaning solution fluidly connected with the source of pressurized fluid, wherein the source of cleaning fluid is configured to substantially flow with the source of pressurized fluid when the pressurized fluid is below the threshold pressure and substantially prevent the source of cleaning fluid from flowing with the source of pressurized fluid when at or above the threshold pressure.

Furthermore, the valve may comprise a first valve in series with a second valve, wherein the first valve is configured to adjust the pressure of the source of pressurized fluid, and the second valve is adjustable to fluidly connect the source of pressurized fluid with one of the first output or the second output.

Furthermore, the first valve may be a throttle valve.

Furthermore, the second valve may be configured to fluidly connect the source of pressurized fluid with both the first output and the second output simultaneously.

In a third aspect, the present invention proposes a fluid outlet device for a pressure washer comprising a housing with an inlet portion, an outlet portion, and defining a fluid flow path therethrough between the inlet and the outlet portion, the inlet portion further comprising a first connector and a coaxial independent second connector.

The first connector may be a male quick connect plug. Furthermore, the second connector may be a tab that is engageable with a corresponding slot.

Furthermore, an outer diameter of the second connector may be greater than an outer diameter of the first connector.

Furthermore, the second connector may be a first threaded connector.

Furthermore, the second connector may be configured to engage an adaptor with a corresponding second threaded connector on an end of the adaptor, wherein the second threaded connector is opposite the first threaded connector.

Furthermore, the adaptor may comprise an adaptor inlet portion and an adaptor outlet portion with an adaptor lumen defined therethrough, wherein the adaptor outlet portion supports the second threaded connector.

Furthermore, the first connector may extend within the adaptor lumen when the second threaded connector engages the second connector.

Preferably, the first connector does not contact the adaptor lumen when the second threaded connection engages the second connector.

Furthermore, the adaptor may be configured to removeably engage a wand.

Furthermore, the adaptor may comprise an inlet connector on an adaptor inlet portion that is removeably connectable with the wand.

Furthermore, the fluid outlet device may further comprise an o-ring disposed with the second connector. Furthermore, the housing may further comprise a chemical injection valve.

Furthermore, the fluid outlet device may further comprise a shroud surrounding the housing, wherein the shroud is configured to be relatively movable with respect to the housing.

Furthermore, the housing and the shroud may be configured to alter a flow of fluid from the outlet portion of the housing when one of the shroud and the housing are moved with respect to the other of the shroud and the housing.

Furthermore, the fluid outlet device may be one of a nozzle a surface cleaner, a rotating brush, a fixed brush, or a roller.

In a fourth aspect, the invention proposes a fluid outlet device for a pressure washer comprising a hollow longitudinal member with an inlet portion and an outlet portion configured to allow a flow of high pressure liquid to flow therefrom, wherein the inlet portion comprises a first connector and a second connector, with the first and second connectors configured to be independently engaged to receive a liquid flow from a pressure washer.

The first connector may be a male quick connect plug, and wherein the second connector may be a rotatable connection portion.

Furthermore, an outer diameter of the rotatable connection portion may be greater than an outer diameter of the male quick connect plug.

Furthermore, the rotatable connection portion may be configured to engage an adaptor with an opposing rotatable connection portion to the rotatable connection portion.

In a fifth aspect, the present invention proposes a fluid outlet device for pressurized fluid flow comprising an inlet configured to receive a flow of liquid, a fixed portion configured to selectively contact a surface to be cleaned, and a rotating portion configured to contact the surface to be cleaned prior to the fixed portion contacting the surface when the device is oriented in a normal operational position.

The fixed portion and rotating portion may each comprise a plurality of bristles. Furthermore, the plurality of bristles on the rotating portion may be made of a relatively soft material. Furthermore, the fluid outlet device may further comprises a wheel with a plurality of fins configured to receive the flow of liquid, wherein the rotating portion is rotatably connected with the wheel.

Furthermore, the rotating portion may be rotatably connected with the wheel with a planetary gear system.

Furthermore, the rotating portion may be fixed to a planetary gear of the planetary gear system, wherein a sun gear is fixed to the wheel, and a ring gear is fixed to the fixed portion, wherein a center of the planetary gear translates around the sun gear as the wheel is rotated.

In a sixth aspect, the present invention proposes a monolithic connector for pressurized fluid flow comprising an input portion comprising a male quick connect coupler, an output portion comprising a female threaded portion and an internal hollow portion configured for fluid flow through the connector from the input portion to the output portion.

A first representative embodiment includes a spray apparatus for a pressure washer. The spray apparatus includes an adaptor configured to receive a flow of pressurized fluid through a conduit fluidly connected with a pressure washer and a multi-position valve movably connected with the adaptor and positionable in a plurality of discrete positions. An operator is engaged with the multi-position valve and a first output and a second output defined within the adaptor, wherein the valve is rotatable to selectively allow the pressurized fluid to flow through one of the first or the second output.

A second representative embodiment includes a spray apparatus for a pressure washer. The spray apparatus includesa source of pressurized fluid and a valve fluidly connected to a conduit for receiving the source of pressurized fluid. A first output is fluidly connectable with the pressurized fluid and a second output fluidly connectable with the pressurized fluid, wherein the second output is operable with a cleaning tool, and wherein the valve is configured to be switched between a first position where the pressurized fluid flows through the first output and to a second position where the pressurized fluid flows through the second output.

A third representative embodiment includes a fluid outlet device for a pressure washer. The device includes a housing with an inlet portion and an outlet portion and a lumen disposed within the housing between the inlet and the outlet portion. The inlet portion additionally includes a first connector and an independent second connector.

A fourth representative embodiment includes a fluid outlet device for a pressure washer. The device includes a hollow longitudinal member with an inlet portion and an outlet portion configured to allow a flow of high pressure liquid to flow therefrom. The inlet portion includes a first connector and a second connector, with the first and second connectors configured to be independently engaged to receive a liquid flow from a pressure washer.

A fifth representative embodiment includes a fluid outlet device for a pressure washer. The device includes a hollow housing with an inlet portion and an outlet portion. A first connector is disposed on the inlet portion and a second connector disposed on the inlet portion proximate the first connector. The first connector comprises a male quick connect coupler plug and the second connector comprises a rotatable connection portion.

Advantages of the present disclosure will become more apparent to those skilled in the art from the following description of the preferred embodiments of the invention that have been shown and described by way of illustration. As will be realized, the disclosure is capable of other and different embodiments, and its details are capable of modification in various respects. Accordingly, the drawings and description are to be regarded as illustrative in nature and not as restrictive.

### BRIEF DESCRIPTION OF SEVERAL VIEWS OF THE DRAWINGS

FIG. 1 is a perspective view of a pressure washer system and a multi-position valve on a wand connected therewith.

FIG. 2 is a perspective view of the multi-position valve of FIG. 1 connected with a rotary brush.

FIG. 3 is a perspective view of the multi-position valve of FIG. 1 connected with a fixed brush.

FIG. 4 is a perspective view of an adapter with the multi-position valve of FIG. 1.

FIG. 5 is a perspective view of another adapter with another multi-position valve.

FIG. 6 is a perspective view of another multi-position valve with a cleaning head connected thereto.

FIG. 7 is a perspective view of a spray head for use with the pressure washer system of FIG. 1.

FIG. 8a is a cross-sectional view of an alternate internal flow structure of the adaptor of FIG. 4.

FIG. 8b is a cross-sectional view of another alternate internal flow structure of the adaptor of FIG. 4.

FIG. 9 is a perspective view of the multi-position valve of FIG. 1 connected with cylinder brush.

FIG. 10 is a perspective view of a fluid outlet device connected with a wand suitable for an electric pressure washer.

FIG. 11 is the fluid outlet device of FIG. 10 exploded from a wand suitable for a gas pressure washer.

FIG. 12 is an exploded view of FIG. 10.

FIG. 13 is an exploded view of an alternate fluid outlet device with a wand suitable for an electric pressure washer.

FIG. 14 is the fluid outlet device of FIG. 13 exploded from a wand suitable for a gas pressure washer.

FIG. 15 is a side view of an adjustable nozzle.

FIG. 15a is the adjustable nozzle of FIG. 15 in a second position.

FIG. 16 is a cleaning device exploded from a wand suitable for a gas pressure washer.

FIG. 17 is the cleaning device of FIG. 16 exploded from a wand suitable for an electric pressure washer.

FIG. 18 is another cleaning device exploded for an adaptor suitable for connection to a wand for an electric pressure washer.

FIG. 19 is the fluid outlet device of FIG. 10 configured with an alternate rotatable connection portion.

FIG. 19a is a cross-sectional view of section A-A of FIG. 19.

FIG. 19b is a cross-sectional view of section B-B of FIG. 19.

FIG. 20 is an alternate fluid outlet device.

FIG. 21 is a side view of a rotary brush usable with the pressure washer system.

FIG. 22 is a side view of the hub and second set of bristles of the brush of FIG. 21.

FIG. 23 is a perspective view of the hub of FIG. 22 with the second set of bristles partially removed.

FIG. 24 is a view of the transmission system of the brush of FIG. 21.

FIG. 25 is a side view of an adaptor for use with pressure washer system.

### DETAILED DESCRIPTION

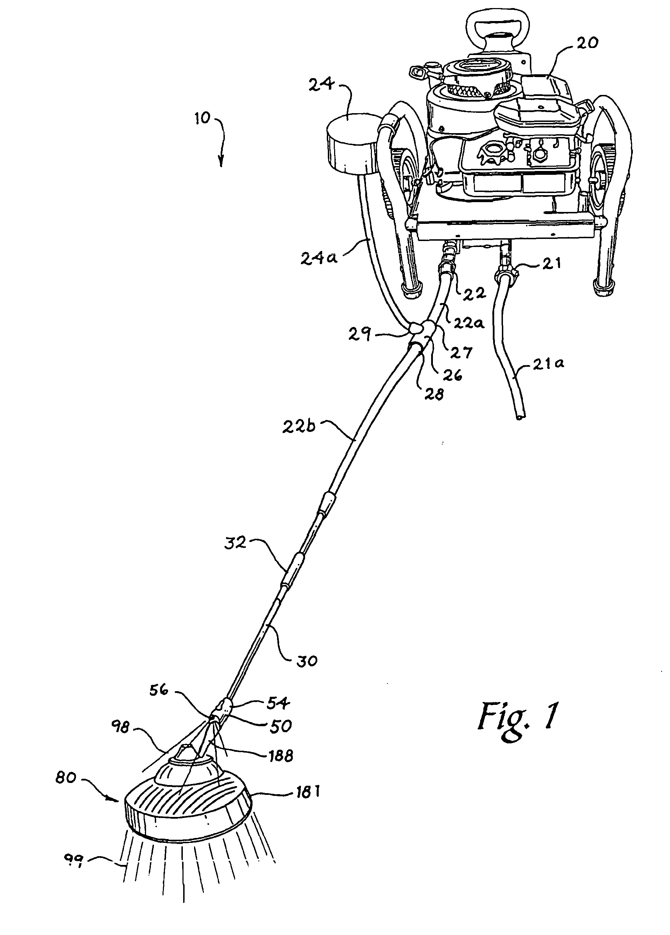

Turning now to FIGs. 1-4, a pressure washer system 10 is provided that is operable in many different operational configurations without requiring disassembly of the components of the pressure washer system 10. The pressure washer system 10 includes a pressure washer 20 that provides a continuous flow of fluid at an elevated pressure, a wand 30 fluidly connected to an output 22 of the pressure washer 20, an adapter 50 with a multi-position valve 54 that is fluidly connected with the pressurized liquid flowing from the output 22 and first and second outputs 56, 57 that are configured to provide a path for the pressurized liquid to exit the adapter 50 and the pressure washer system 10.

The pressure washer 20 includes an output port 22 that is fluidly connected to at least one hose 22a to allow flow from the pressure washer 20 to a remote location for use at a work site. The pressure washer 20 may include an input port 21 that receives a flow of water from a continuous source. In other embodiments, the pressure washer 20 may include a liquid storage volume (not shown) to allow for pressure washer 20 operation when an inlet source of liquid is not desired or available. The pressure washer 20 includes a pump (not shown) that increases the pressure of the liquid therein and provides the motive force for liquid flow through the output port 22, the hose 22a, and ultimately to the adapter 50 and any cleaning heads 80 attached thereto (discussed below). The pump for the pressure washer 20 may be operated in conjunction with an electric motor (not shown) or a gasoline engine (not shown).

The pressure washer 20 additionally includes a storage volume 24 for a volume of cleaning solution that may be mixed with a flow of pressurized liquid leaving the pressure washer 20 for cleaning the worksite or workpiece. The storage volume 24 may be rigidly or removeably connected to the pressure washer 20 and is fluidly connected with the fluid flow by a cleaning fluid hose 24a. The cleaning fluid hose 24a may be fluidly connected to the hose 22a with a venturi 26. As is known in the art, a venturi creates a pressure drop between the inlet and outlet 27, 28 of the venturi 26 with the pressure drop created 26 being proportional to the flow rate through the venturi 26. Depending on the pressure and flow rate of the pressurized fluid through the venturi, a sufficient differential pressure is created across the venturi 26, to create a sufficient suction felt by the cleaning solution in the storage volume 24 (as communicated thereto by the cleaning fluid hose 24a connected to an intermediate port 29 in the venturi 26) to draw cleaning fluid into the venturi 26 and become entrained with the pressurized fluid flowing therethrough.

During previous experimental use of a venturi 26 disposed in fluid communication with the output flow of a conventional pressure washer 20, it was determined that a significant amount of cleaning fluid becomes entrained within the pressurized fluid flowing through the venturi 26 when the pressure of the fluid flowing therethrough is less than a threshold pressure. The threshold pressure is variable based on the size and shape of the various components of the system, including the venturi 26, the hoses 22a, 22b, the lance 30, and the adapter 50. In some embodiments it has been experimentally determined that a typical threshold pressure for conventionally sized components is about 400 psi. In other embodiments, the threshold pressure may be above or below this pressure depending, for example, on the length of the venturi 26 in addition to the relative lengths of the decreasing and increasing sections of the venturi 26 (not shown) and the relative widths of the inlet, throat, and the outlet of the venturi 26 (not shown).

It has further been experimentally determined that substantially no cleaning fluid flows into the venturi 26 when the pressure of the fluid flow through the venturi 26 is greater than the threshold pressure. As is known, the pressure of the fluid flowing through the hose 22a varies based on the output pressure of the pressure washer 20 and the output pressure of the hose 22. Accordingly, throttling, or reducing the cross-sectional area within the flow path increases the fluid pressure due.

A wand 30 may be fluidly connected to the venturi 26 with an intermediate, or second hose 22b. The wand 30 may be a hollow, rigid tube with a lumen to allow the pressurized liquid flow leaving the venturi 26 to flow therethrough. The wand 30 may have one or more grip portions 32 that are configured to provide an ergonomic gripping surface for the user's hands to allow for stable and comfortable control of the wand 30 during operation.

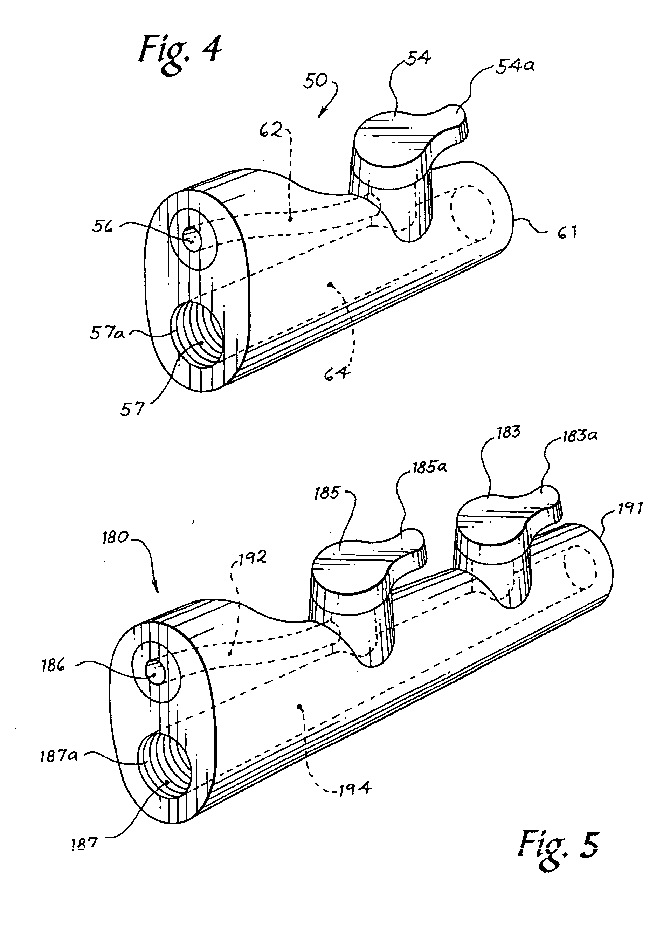

An adaptor 50 may be removeably connectable to an output end of the wand 30. As best shown in FIG. 4, the adaptor 50 includes a single inlet flow path 61 that receives pressurized fluid flow from the wand 30 and upper and lower outlet flow paths 62, 64 downstream of the inlet flow path 61. The upper and lower outlet flow paths 62, 64 are spaced from each other. In some embodiments, the upper outlet flow path 62 is fluidly connected with one or more upper apertures 56 and the lower outlet flow path 64 is fluidly connected with a lower connection 57. One or both of the upper and lower apertures may be configured to receive a nozzle, such as Turbo Nozzle, a fan spray nozzle, or other types of nozzles known in the art.

The lower connection 57 provides both an aperture to allow fluid to exit the adapter 50 from the lower flow path 64, and additionally includes a connection structure 57a for fixedly connecting a cleaning device 80. The connection structure 57a may be internal female threads, a quick connect coupler connection, or other mechanical fluid connection mechanisms known in the art.

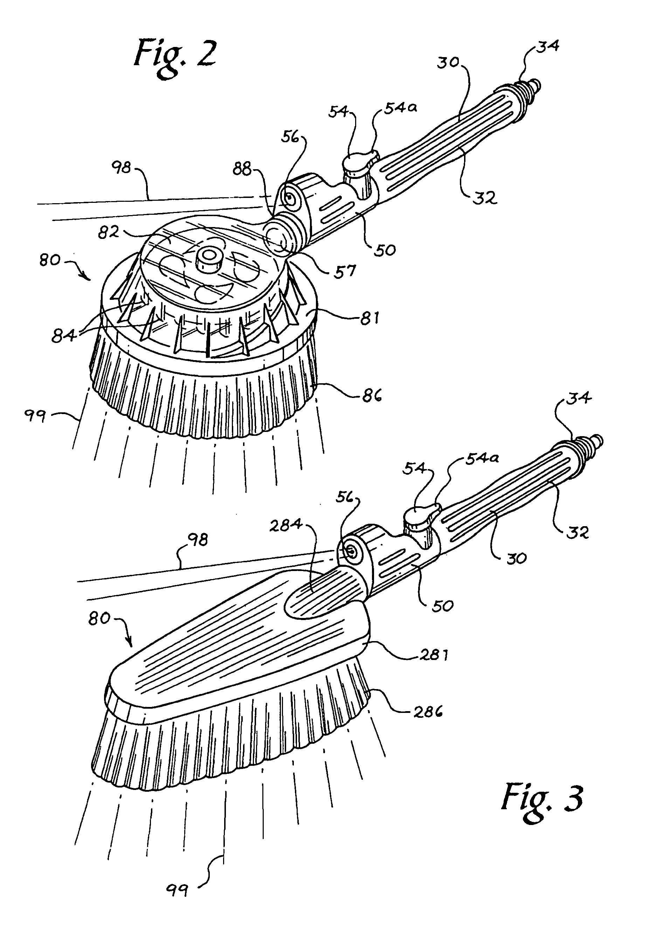

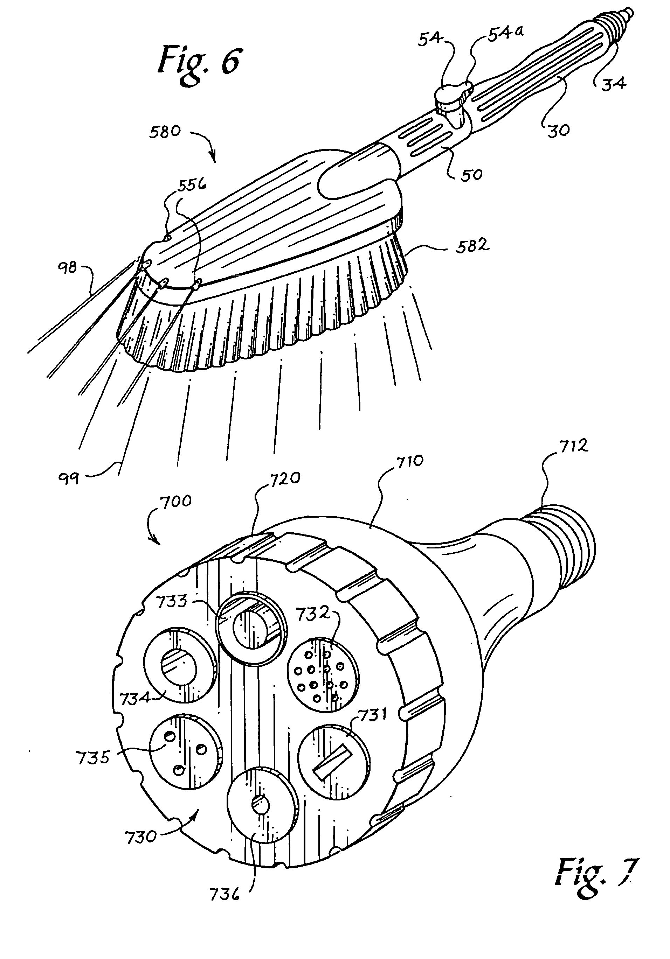

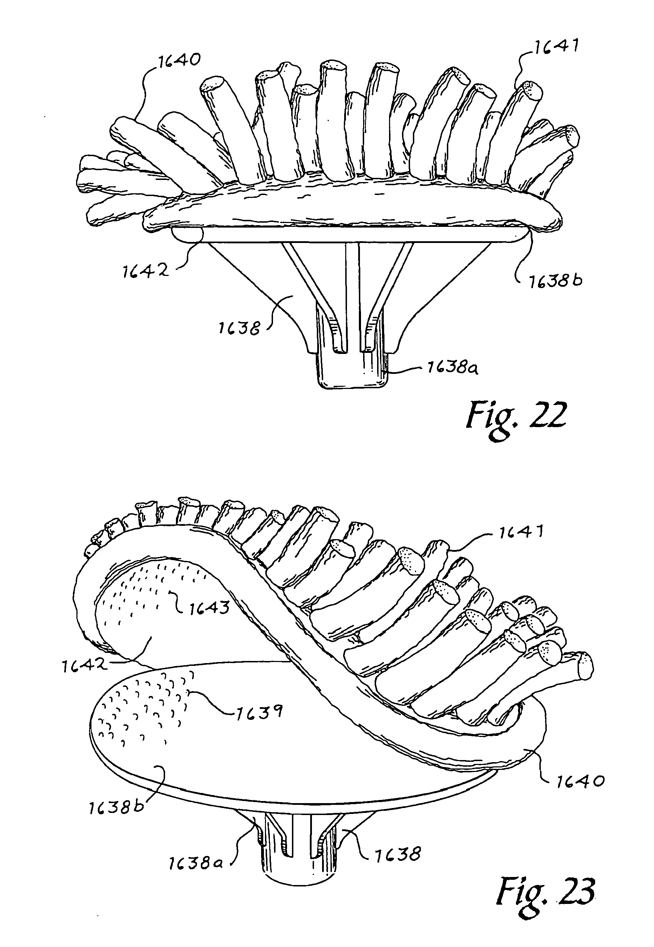

In other embodiments, the upper and lower outlet flow paths 62, 64 may each be fluidly connected with the cleaning head 80 (discussed below). As shown in FIG. 6, a cleaning head 580 may include one or more apertures 556 that provides for fluid that flowed through the upper outlet path 62 to exit the cleaning tool 580 and flow (shown schematically as 98) directly onto the surface to be cleaned. Additionally fluid that flowed through the lower outlet path 64 flows from the cleaning head 580 (shown schematically as 99) proximate the cleaning bristles 582. In some embodiments, the cleaning head 580 may include a rotary portion that rotates with a wheel as discussed in embodiments herein and shown in FIGs. 2 and 21-24.

While the two outlet paths 62, 64 are defined herein as the upper and lower outlet flow paths, one of skill in the art will appreciate that the names of these two flow paths are simply reflective of the relative position of these flow paths in one embodiment, and that the two flow paths 62, 64 may be disposed in other alternate relative locations with respect to each other. For the sake of brevity, the flow path bypassing the cleaning head 80 will be referred to as the upper outlet flow path 62 and the other flow path will be referred to as the lower outlet flow path 64. One of ordinary skill in the art should understand that outer relative positions for these two flow paths are possible depending on the design of the pressure washer system 10 components.

The upper and lower flow paths 62, 64 are configured to receive flow in a range of different pressures. In some embodiments, the upper flow path 62 is configured to receive flow of up to 4000 psi, and the lower flow path 64 is configured to be capable of receiving flow of at least between 600 and 800 psi.

The adaptor 50 includes a valve 54 that is selectively movable to select the flow path 62, 64 for fluid flow from the inlet flow path 61. The valve 54 is movably disposed within the adaptor 50 to provide for selective throttling of the fluid flow through the adaptor 50, or to selectively increase or decrease the cross-sectional area available for fluid flow through the adaptor 50. The valve 54 is movably disposed to between a first position providing a relatively unimpeded flow path (or a cross-sectional area substantially equal to the cross-sectional area of the input flow path 61) and another position to provide a substantially impeded (or a cross-sectional area substantially less than the input flow path 61) flow path. The valve 54 may be a ball valve, a butterfly valve, a gate valve, or any other types of valves that are capable of multiple positions that are known in the art.

In some embodiments, the relatively unimpeded flow path provides for a pressure within the hose 22, venturi 26, and adaptor 50 less than the threshold pressure. As discussed above, in the relatively unimpeded flow path, sufficient differential pressure is developed across the venturi 26 (due to the relatively high flow rate through the venturi 26) causing cleaning fluid to flow into the intermediate port 29 in the venturi 26 and become entrained with the pressurized fluid flowing therethrough. The substantially impeded position provides a pressure greater than the threshold pressure. As discussed above, flow through the venturi 26 decreases, which decreases the differential pressure across the venturi 26. At a pressure above the threshold pressure, the differential pressure becomes insufficient to induce a significant flow of cleaning fluid to become entrained with the pressurized fluid flowing therethrough.

In some embodiments, the valve 54 is rotatably mounted to the adapter 50, with rotation of the valve 54 (through an operator 54a rigidly mounted thereto) causing the output flow path (62, 64) fluidly connected with the input flow path 61 to change and to simultaneously alter the cross-sectional flow area available within the adapter 50. The valve 54 may be rotatably mounted between two or more discrete positions.

In other embodiments, the valve 54 may be disposed on the cleaning head 80 (discussed below), or may be proximate the handle or gripping portion of the wand 30, or another ergonomically convenient position on the pressure washer system 10. In embodiments where the valve 54 is disposed at a distance from the cleaning head 80, the upper and lower flow paths (62, 64) are provided from the valve 54 to the one or more apertures 56 disposed with the upper outlet flow path 62 (allowing flow to bypass the cleaning head 80 and flow directly to the surface to be cleaned) and to the outlet flow path through the cleaning head 80 from the lower outlet flow path 64.

In some embodiments, the pressure washer system 10 may include an adaptor 750 with multiple outlet flowpaths downstream of the valve, with parallel flow through the flow paths after flowing through the valve 54.

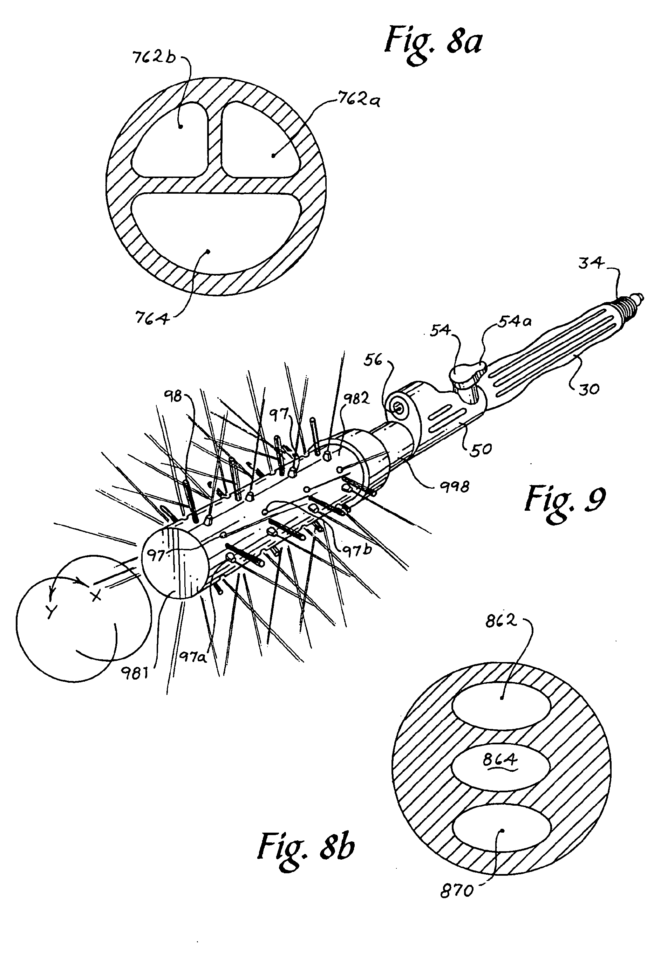

FIGs. 8a and 8b provide alternate different cross-sections for flow with paths 762a and 762b designating the flow paths similar to the upper outlet flow path 62 discussed above and path 764 designating the flow path similar to the lower outlet flow path 64, discussed above. Similarly, in embodiments where the valve 54 is provided either proximate or on the cleaning head 80 or proximate the wand handle or other portions of the pressure washer the flow paths may be defined with one or more structures to allow parallel flow from the valve to the outlet. In embodiments where the valve 54 is mounted to the pressure washer or associated structure upstream from the wand or cleaning head, a removeably multi-flowpath wand may be provided to provide for segregated fluid communication between the valve and the cleaning head 80. Representative structure for providing a removable multi-flowpath wand is further discussed in Application Serial No. 11/585,503, filed on October 24, 2006, published as U.S. Patent Publication 2007/0125878, titled "Hand Held Pressure Washer," which is commonly assigned as this application and is hereby fully incorporated by reference herein.

In other embodiments shown in FIG. 8b, an adaptor 850 may be provided with paths 862, 864 similar to the upper and lower outlet flow paths 62, 64, discussed above, but additionally include a suction flow path 870, which is disposed to allow for suction flow from the surface to be cleaned (normally proximate or in contact with the cleaning head 80). The pressure washer system 10 may include a suction source that communicates with the surface to be cleaned and brings fluid through the suction flow path 870 toward the pressure washer pump. The fluid flowing through the suction flow path 870 may or may not ultimately flow through the valve 54 and the flow paths 862, 864.

In some embodiments, the valve 54 may be rotated between four discrete positions. A first position aligns flow through the upper flow path 62 and substantially throttling the flow through the adapter 50 (i.e. substantially preventing cleaning solution from being entrained with the fluid flow through the venturi 26 and the adaptor 50). A second position maintains flow through the upper flow path 62 and with the flow substantially unthrottled, or unimpeded through the adaptor 50 (allowing cleaning solution to be entrained with the fluid flow through the venturi 26 and the adaptor 50).

A third position aligns flow through the lower flow path 64 and substantially throttles or impedes flow through the adaptor. A fourth position maintains flow through the lower flow path 64 and with the flow substantially unthrottled, or unimpeded through the adaptor 50. In other embodiments, the valve 54 may include the same four positions but be rotatable through the positions in various different orders, depending on the structure of the valve 54 and the adaptor 50. In other embodiments, the valve 54 may be operated by linearly moving the valve 54 in a direction substantially perpendicular to the direction of flow through the adaptor 50. In still other embodiments, the valve 54 may select the operational status of the flow through the adaptor 50 in various other ways. In yet still other embodiments, the valve 54 may be positioned to allow flow simultaneously through the upper and lower flow paths 62, 64 in both the un-throttled and throttled situations.

In an alternate embodiment shown in FIG. 5, an alternate adaptor 180 may be fluidly connected with the wand 30 downstream of the venturi 26. Similar to the adaptor 50 discussed above, the alternate adaptor 180 includes dual parallel upper and lower flow paths 192, 194 that are fluidly connectable with the inlet flow path 191 (and ultimately with the venturi 26 and the pressure washer outlet 22). The alternate adaptor 180 includes two serial valves, an upstream throttle valve 183 and a downstream selector valve 185. Each of the throttle and downstream selector valves 183, 185 include operators 183a, 185a rigidly mounted thereto.

in some embodiments, the upstream throttle valve 183 is rotatably connected to the adaptor 180 to selectively throttle flow through the adaptor 180 (or to alter the cross-sectional area available for flow through the adaptor 180), which selectively allows or substantially prevents cleaning fluid from becoming entrained with the fluid flowing through the venturi 26 and the adaptor 180. The downstream selector valve 185 is rotatably connected to the adaptor 180 to selectively allow flow through either the upper flow path 192 or the lower flow path 194. In some embodiments, the downstream selector valve 185 may be positioned to allow flow through both the upper and lower flow paths 192, 194. The upstream throttle valve 183 and the downstream selector valve 185 are adjustable independent of the position of the other valve, to allow the same four discrete operational situations as the valve 54 of the adaptor 50 discussed above.

A cleaning head 80 may be removeably mountable to the aperture 57 (187) of the adaptor 50 in fluid communication with the lower flow path 64 (or the lower flow path 194 of the alternate adaptor 180). As discussed above, the cleaning head 80 may include an inlet male end 88 that is connected with the aperture 57 with a threaded connection, a quick connect coupler connection, or with other mechanical fluid connection devices or structures known in the art. The cleaning head 80 may be a surface cleaner 181 (FiG. 1), a rotary brush head 81 (FIG. 2), a fixed brush head 281 (FIG. 3), or other type of fluid cleaner known in the art.

As shown in FIG. 1, a surface cleaner 181 includes a housing 182 and a bar (not shown) with a plurality of nozzles (not shown) that is rotatably mounted within the housing 182. The bar receives pressurized fluid flowing through the inlet end 188. The plurality of nozzles are normally provided at the ends of the bar and are each oriented at an oblique angle with respect to the bottom of the housing. Fluid flow through the nozzles causes the bar to rotate as fluid is expelled therefrom due to the torque created on the bar by the reaction force of the water leaving the nozzle at an oblique angle.

As shown in FIG. 2, a rotary brush head 81 may include a wheel 82 with a plurality of radial teeth 84 that are impactedly contacted by the fluid flow through the inlet end 88, which provides torque to rotate the wheel 82. A plurality of bristles 86 are attached to the wheel 82 and rotate therewith to clean the surface with the fluid flowing through the brush head 81 in the vicinity of the bristles.

FIG. 3 shows a fixed brush head 281. The fixed brush head 281 includes a plurality of bristles 286 and receives fluid flow through the inlet end 284 from the adaptor 50. Fluid flowing through the fixed brush head 281 is directed toward the surface to be cleaned as shown schematically as element 99 and the fixed brush head may be moved upon the surface to mechanically agitate the same to provide extra cleaning. In still other embodiments, the cleaning head 80 may be a roller brush that receives fluid from the second outlet 57 and directs the fluid toward the surface to be cleaning while being mechanically rolled over the surface.

FIG. 9 shows a cylinder brush 981. The cylinder brush 981 may include a plurality of bristles 986 (drawn schematically in FIG. 9) that extend radially from the brush head 982, or alternatively the brush head 982 may include a nap, similar to that found on a paint roller brush. The cylinder brush 981 includes a plurality of radial teeth that are configured to receive fluid flowing through the adaptor 56 and the lower flow path 64 (discussed above) and transfer energy from the fluid to the teeth to rotate the brush head 982. The brush head 982 rotates in the direction X (or the opposite direction Y depending on the orientation of the teeth). Due to the rotation of the brush head 982, a plurality of fluid exits 97 are provided on the brush head 982 to allow the liquid to exit the brush head radially in all directions. In some embodiments, the exits 97 may be nozzles 97a, or in other embodiments, the fluid exits 97 may be apertures 97b.

As shown schematically in FIG. 7, a spray selector device 700 may be mounted to one of the first or second outputs 56, 57. The spray 700 includes a plurality of fluid outlet formations 730, which are selectively placed in fluid communication with the fluid inlet 712 and direct the fluid flowing therefrom in a specific pattern. For example, a relatively large and relatively small cylindrical streams of fluid flow from outlet formations 736 and 734, respectively. Similarly, a hollow cylindrical flow of fluid flows form the outlet formation 733. A plurality of streams of fluid exits from formations 732 and 735, depending on the number of apertures provided. Finally, a planar stream may flow form formation 731. Each of the formations 730 are fixed on the device and may be selected by rotating a dial 720 with respect to the device housing 710.

The pressure washer system 10 can be operated in four discrete operational states based on the position of the valve 54 on the adapter 50 (or in other embodiments the positions of the valves 183, 185 on the alternate adapter 180). While the pressure washer 20 is running, liquid flows through the output 22 at a relatively high pressure and flows through one or more hoses 22a, 22b and the venturi 26. Next, the fluid flows through a wand 30 and through the adapter 50. When the valve 54 is in a first position, the flow is throttled (i.e. the cross-sectional area available for flow is reduced), which reduces the mass flow rate through the adaptor 50 and the venturi 26, while simultaneously increasing the upstream pressure (because the pressure washer 20 attempts to provide a constant flow through the output port 22) to above about 400 psi. When the flow is reduced through the venturi 26, the differential pressure thereacross decreases, which substantially reduces the suction on the storage container 24 communicated through the hose 24a and substantially eliminates the flow of cleaning solution into the venturi 26. The valve 54 further directs fluid flow through the upper flow path 62 and ultimately out of the aperture 56 on the adaptor 50. The fluid flow through the aperture 56 in the adapter 50 is schematically shown as element 98 in FIGs. 1-3.

The valve 54 may be rotated (or otherwise moved) to the second position, which increases the cross-sectional area available for flow, and increases the flow rate through the venturi 26 and simultaneously decreasing the pressure to below 400 psi. With the increased differential pressure across the venturi 26 (due to the increased fluid flow through the venturi 26) cleaning fluid flows from the container 24 and the hose 24a into the intermediate port 29 of the venturi 26 to become entrained with the flow therethrough. The upper flow path 62 remains in fluid communication with the inlet flow path 61 and fluid continues to flow through the aperture 56 as shown in element 98.

When the valve 54 is further rotated (or otherwise moved) to the third position, the flow through the adaptor 50 becomes impeded due to a reduction in cross-sectional area available for flow, which substantially eliminates the entry of cleaning solution into the venturi 26, as discussed above. In the third position, the valve 54 aligns the lower flow path 64 to receive fluid flow, which is normally fluidly connected with a cleaning head 80, as discussed above. The fluid flow leaves the cleaning head as schematically shown as element 99 of FIGs. 1-3.

The valve 54 may be rotated to a fourth position where the flow through the adaptor 50 becomes substantially unimpeded (allowing cleaning fluid to become entrained with the fluid flowing through the venturi 26, as discussed above) and retaining fluid communication with the lower flow path 64 and therefore the cleaning head 80, if attached. As discussed above, in some embodiments, the valve 54 may additionally be positioned to allow flow simultaneously through both the upper and lower flow paths, both with the fluid flow impeded, or throttled and with fluid flow unimpeded.

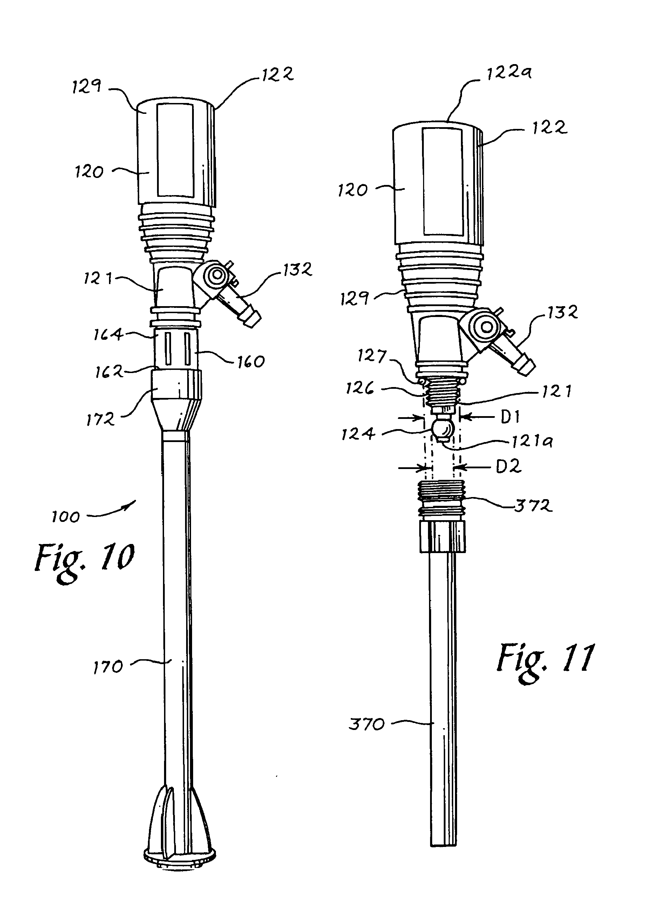

Turning now to FIGs. 10-14, a fluid outlet device 100 is provided. The fluid outlet device 100 includes a housing 120 with an inlet portion 121 and an outlet portion 122. A lumen 122a is defined through the housing 120 to allow fluid to flow from the inlet portion 121 to the outlet portion 122. The outlet portion 122 receives a nozzle 129 or similar structure to direct fluid within the lumen 122a to exit the housing 120 in a specific pattern and at a predetermined pressure.

The nozzle 129 may be configured to allow one of several geometries of fluid to exit the outlet portion 122 of the housing 120. For example, the nozzle 129 may provide for a single cylindrical stream of fluid, a planar stream of fluid, or several cylindrical streams of fluid. Similarly, the nozzle 129 may alter the pressure of the fluid leaving the housing through the outlet portion 122 due to the relative size of one or more apertures in the nozzle 129. In some embodiments, the outlet portion 122 may allow for a plurality of different types of nozzles 29 to be inserted and removed from the outlet portion of the housing 120, to alter the geometry and pressure of the fluid. As shown in FIGs. 10-12, the housing 120 may include a chemical injection valve 132, such as a venturi, which allows a secondary fluid to be entrained and mixed with the fluid flowing through the housing.

The housing 120 is configured to be fluidly connected to a pressure washer. Specifically, the housing 120 is configured to receive a continuous flow of pressurized water from a pressure washer system 10. The housing 120 is configured to be fluidly connected to a plurality of types of pressure washers. For example the housing 120 is configured to be fluidly connected with gas powered pressure washers and electrically powered pressure washers (i.e. both pressure washers powered by alternative current (AC) and pressure washers powered form direct current (DC) from an attached battery or other source).

In some embodiments, the housing 120 is configured to be removeably attached to a wand (170, 370) that is fluidly connected to a pressure washer. A wand (170, 370) may be a hollow, rigid tube with a lumen to allow the pressurized liquid flow leaving the pressure washer to flow through and out the outlet of the wand. The wand may be directly connected with the pressure washer system 10 or may be fluidly connected with the pressure washer system 10 with a hose or similar structure therebetween. The wand (70, 170) may have one or more grip portions (not shown) that are configured to provide an ergonomic gripping surface for the user's hands to allow for stable and comfortable control of the wand (170, 370) during operation.

As is known in the art, several different types of wands are used with different pressure washers depending on the mode of operation and the type of pressure washer. For example, as shown in FIGs. 10-12, and 13, a wand 170 may be an elongate tubular member that is configured to allow pressurized liquid flow from an electric pressure washer. Because electric pressure washers generally produce relatively low pressure flows with a maximum pressure of between about 1300 psi and about 1800 psi (maximum pumping pressures are limited by the power available with standard U.S. 120 volt electric current), wands 170 configured to be used with electric pressure washers may be designed from lighter and relatively inexpensive materials, such as plastic because the wands 1 70 need not include the strength to accept higher pressure fluid flows therein. Because wands 170 for use with electric pressure washers only receive relatively low pressure fluid, the connection members 172 for connection with components of a pressure washer system need not be as strong and relatively leak-tight as wands configured for higher pressure applications. For example, wands 170 may include threaded or snap fit connection members 172 for connection with nozzles or similar output members to direct fluid from the pressure washer to the surface to be cleaned.

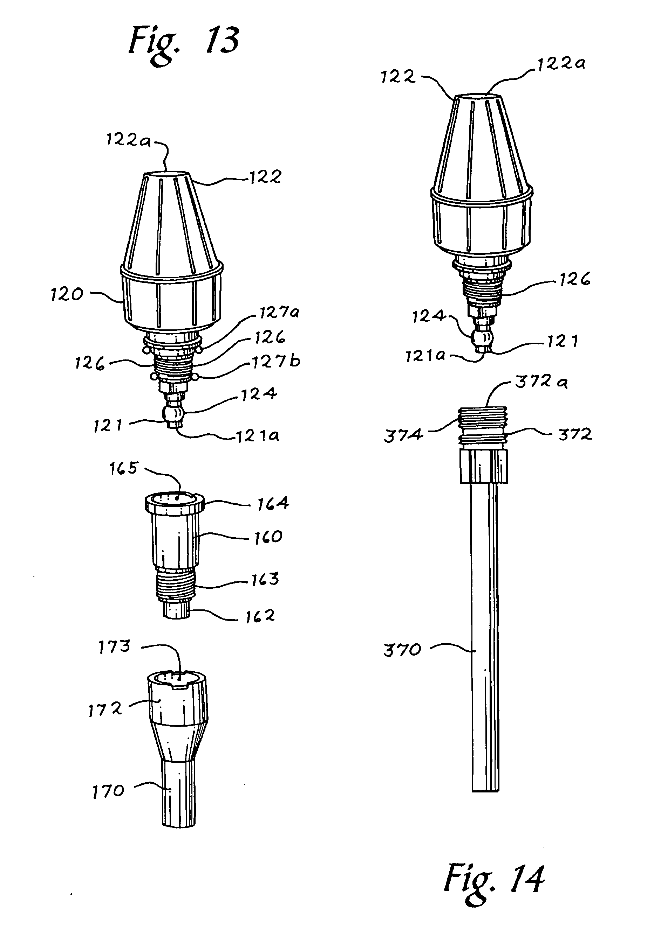

In contrast, as shown in FIGs. 11 and 14, wands 370 that are configured to be used with gas pressure washers are similarly long and tubular members, but are configured to receive relatively high pressure fluid flows. Gas pressure washers generally have maximum pressures of between 2000 and 3800 psi, which requires stronger materials and improved connectors over those required for lower pressure applications. Specifically, because wands 370 configured to be used with gas pressure washers may receive relatively high pressure fluid flow, wands 370 may be made from metal and include stronger and more leak tight connection members 372. For example, wands 370 may include metal female quick connect couplers or other similar relatively leak tight connection members 372.

The inlet portion 121 of the housing 120 is configured to be fluidly connectable with wands 170 configured to be fluidly connected to electric pressure washers and also with wands 370 configured to be fluidly connected to gas pressure washers. The inlet portion 121 includes a first connector 124 and a second connector 126.

The first connector 124 is configured to be fluidly connected with a connection member 372 of a gas pressure washer wand 370. Specifically, the first connector 124 may be a male quick connect coupler plug, which is configured to releasably engage a female quick connect coupler on a wand 370, as shown in FIGs. 11 and 13. The structure of male and female quick connect couplers is well known in the art. The first connector 124 may be disposed on the end of the housing 120 at the inlet of the housing 120. Further, the first connector 124 defines an aperture 21 a that is configured to receive fluid from the wand 170 (370) and allow fluid flow through the lumen 122a to the outlet portion 122 of the housing 120.

The second connector 126 is disposed on the inlet portion 121 of the housing proximate the first connector 124. The second connector 126 is configured to provide a mechanical and fluid connection with a wand when the first connector 124 does not provide a mechanical connection with a wand. The second connector 126 may be configured to directly mechanically engage a wand 170 for an electric pressure washer, or in other embodiments shown in FIGs. 10, 12, and 14, the second connector 126 may be mechanically connected to the wand 170 with an adaptor 160. In still other embodiments, the second connector 126 may mechanically engage the second output 57 of an adaptor 50, as shown in FIG. 4.

The adaptor 160 provides a removable mechanical connection between the electric pressure washer wand 170 and the housing 120. The adaptor 160 includes an inlet portion 162 and an outlet portion 164. The inlet portion 162 is configured to be directly mechanically and fluidly connected with an outlet connection 172 of the wand 170. The inlet portion 162 of the adaptor may be configured with a rotatable connection portion that mechanically and fluidly connects a corresponding opposite corresponding rotational connection portion of the wand 170. In some embodiments, the inlet portion 162 may be configured with a male or female threaded portion that is configured to threadably connect with an opposite male or female threaded portion on the outlet connection portion 172 of the wand 170. In other embodiments, the adaptor 160 may be fluidly and mechanically connected to the wand 170 with other structures known in the art, such as one or more tabs on one of the wand 170 or the adaptor 160 that are rotatably engageable with one or more slots on the other of the wand or adaptor 170, 160.

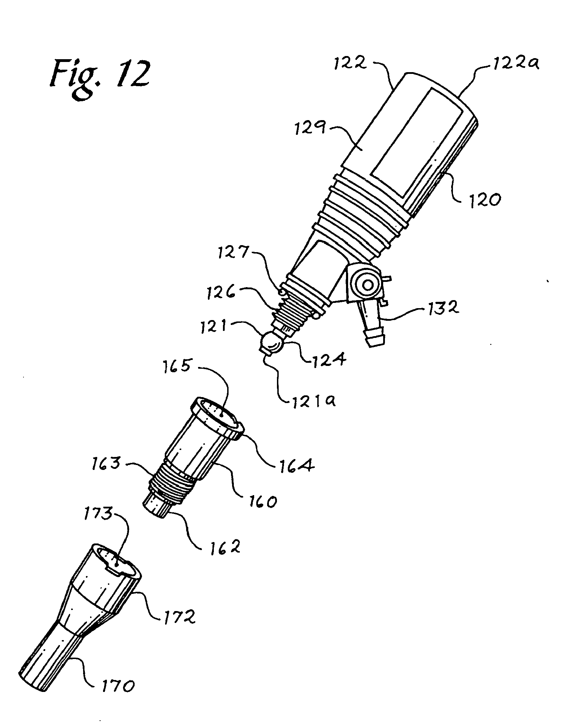

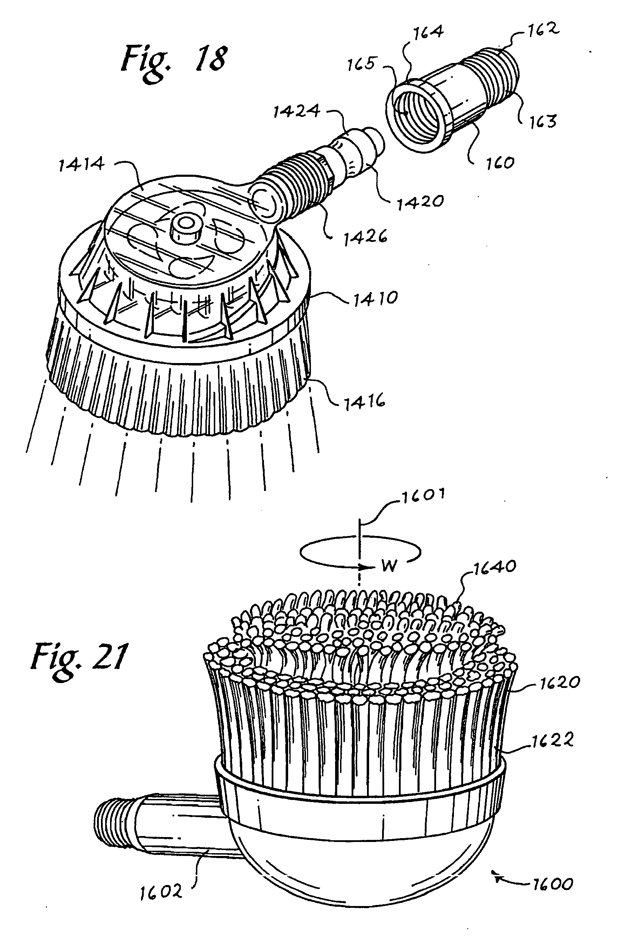

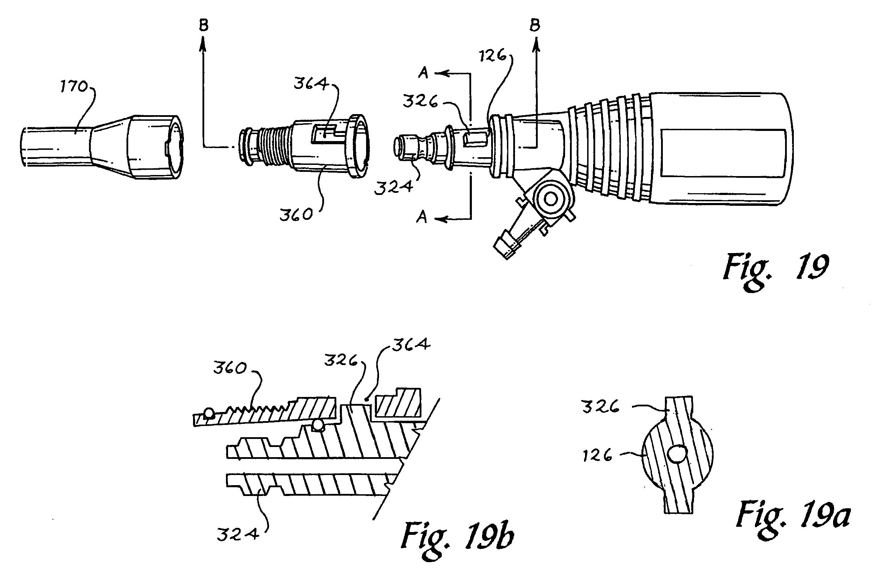

The adaptor 160 includes a lumen to allow fluid communication through the adaptor between the inlet portion 162 and the outlet portion 164. The outlet portion 164 is configured to engage the second connector 126 of the housing 120. In some embodiments, the outlet portion 164 and the second connector 126 each include corresponding opposite rotatable connection portions. For example, where the second connector 126 includes a plurality of threads, the outlet connection 164 includes an opposite threaded portion (best shown in FIG. 18) that engages the second connector 126. In some embodiments as shown in FIGs. 12 and 13, the second connector 126 may include a plurality of male threads, while in other embodiments shown in FIG. 101, the second connector 126 may include a plurality of female threads. In other embodiments, shown in FIG. 19, the second connector 126 may be one or more locking tabs 426 that extend radially from the housing 120, which are received in one or more corresponding retention slots 364 on the adaptor 160. FIGs. 19a and 19b provide cross-sectional views of FIG. 19 to provide additional detail regarding the structure of the locking tabs 326 and the retention slots 364. In other embodiments, the one or more locking tabs may be disposed on the adaptor 160 and the retention slots may be disposed on the housing 120.

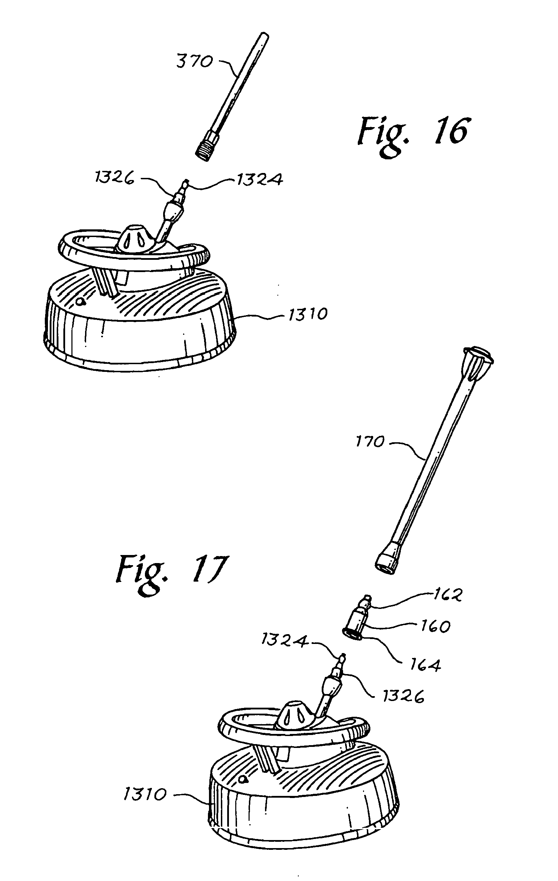

As best understood with reference to FIG. 12 and 18, in embodiments where the adaptor 160 is used to provide a mechanical and fluid connection between the wand 170 and the housing 120 (so that the adaptor 160 mechanically engages the second connector 126 of the housing 120), the first connector 124 extends within the lumen of the adaptor 160 when the outlet portion 64 of the adaptor 160 engages the second connector 126. Accordingly, fluid flowing from the wand 170 flows into the adaptor 160 and ultimately into the inlet aperture 121 a of the housing 120 located within the first connector 124. Because the inlet aperture 121 a of the housing 120 has a smaller diameter than the lumen of the adaptor 160 (i.e. the lumen of the adaptor 160 is configured to receive the first connector therein), fluid collects within the lumen of the adaptor 160. To prevent unwanted leakage during pressure washer operation, one or more o-rings 127 (FIG. 12) or other leakage prevention structures are provided on at least one of the second connector 126 or the adaptor 160. As shown in FIGs. 16-18, a cleaning head may be removeably mechanically and fluidly connectable to a wand (170, 370) of a pressure washer.

By way of example, as shown in FIG. 16 a surface cleaner 1310 may be connected with a wand 170 for a gas pressure washer or as shown in FIG. 17, the same surface cleaner 1310 may be connected with a wand 370 for an electric pressure washer. The surface cleaner 1310 includes a connection device 1320 that includes a first connector 1324 suitable for connection with a gas pressure washer wand (i.e. the first connector 1324 may include a male quick connect plug) and a second connector 1326 suitable for connection with an electric pressure washer wand 370 potentially with an intermediate adaptor 160, discussed above (i.e. the second connector 426 may include a threaded section, a locking tab or other similar mechanical connection structures discussed above). The first and second connectors 1324, 1326 are similar to the first and second connectors 124, 126 discussed above, and for the sake of brevity will not be repeated here.

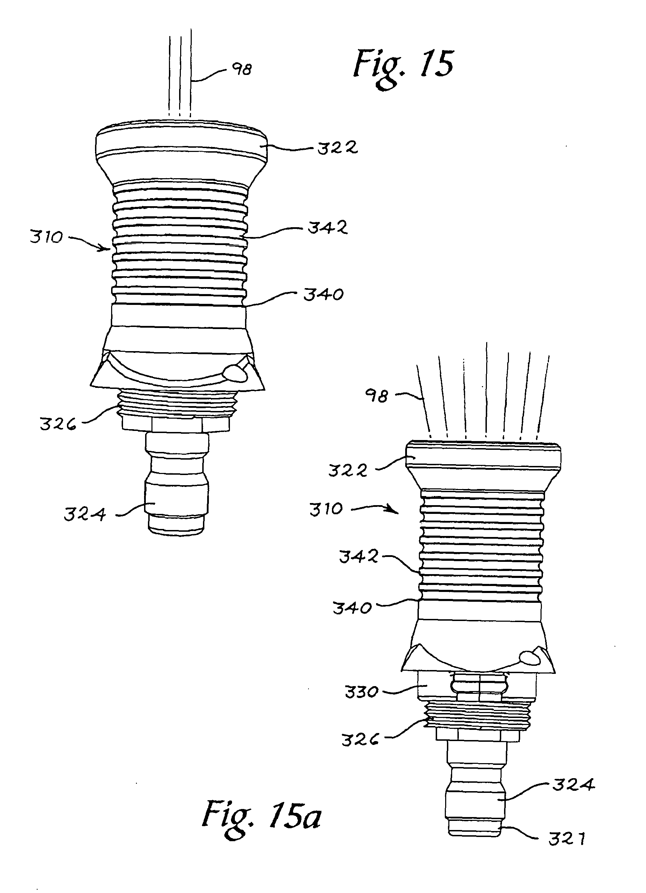

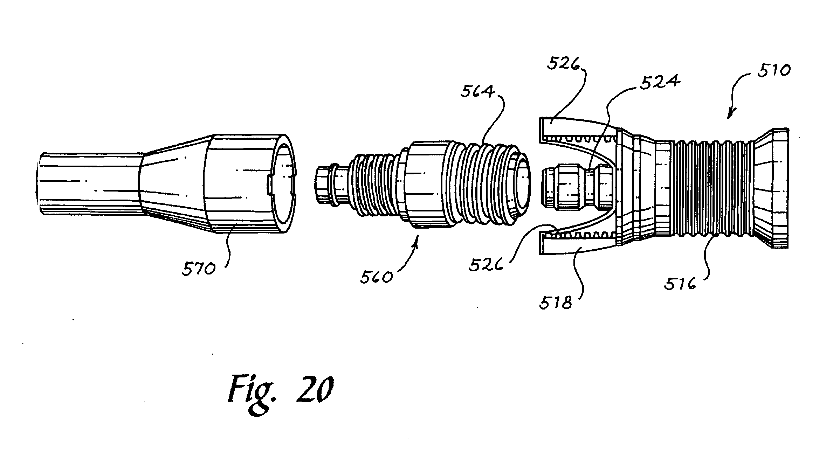

Similarly, as shown in FIG. 18, a rotating brush 1410 may be mechanically and fluidly connected with wands 70, 170 for electric and gas pressure washers 70, 170, with first and second connectors 1424 and 1426 (similar to first and second connectors 124, 126 discussed above). Similar to the embodiments discussed herein and shown in FIGs. 2 and 21-24, the rotating brush 1410 may include a set of fixed outer bristles 1416 and a central rotating portion that rotates based on torque generated by a water wheel 1414 connected thereto. The central portion may include a rotating sprayer wand, or a rotating central brush portion. In still other embodiments, other types of cleaning heads, such as fixed brushes, rollers, or one or more nozzles may be attached to both types of wands 170, 370 discussed above. As shown in FIGs. 15 and 15a, an adjustable nozzle 310 may be connected to both types of wands 170, 370 and includes both first and second connectors 324, 326, similar to first and second connectors 24, 26 discussed above. As shown in FIG. 20, an alternate adjustable nozzle 510 may be provided. The nozzle 510 includes a plurality of fins 518 that extend rearwardly form the shroud 516 of the nozzle 510. The fins 518 each include female threads 526 formed therein, which define the second connector 526 that is engageable with a male threaded outlet end 564 of an adaptor 560. The nozzle 510 includes a first connector 524 that extends within a lumen within the adaptor 510 to receive fluid from the adaptor 510 (and ultimately from the wand 570).

Turning now to FIGs. 21-24, a brush 1600 suitable for fluid connection with a pressure washer system 10. The brush 1600 includes an input connector 1602 that receives fluid from an upstream source of pressurized fluid. The input connector 1602 is normally a male type connector, such as a male threaded connector, a male quick connect coupler, or the like.

The brush 1600 additionally includes a first set of bristles 1620 and a second set of bristles 1640. The first set of bristles 1620 are fixed to the bottom surface of the brush 1600 for contacting a surface to be cleaned. In some embodiments shown in FIG2. 21 and 24, the first set of bristles 1620 may be disposed around the outer surface of the brush 1600. The bristles 1620 may extend from the bottom surface of the brush 1600 as a plurality of clumps 1622 of bristles, with a plurality of clumps 1622 of bristles provided to form two or more concentric circles of bristles around the outer circumference of the brush 1600.

Similar to the embodiment shown in FIG. 2, the brush 1600 is configured to receive a flow of liquid through an inlet connector 1602. The brush 1600 is configured to direct the flow of liquid toward a rotatable wheel 1630. The wheel 1630 may include a plurality of cups, fins, buckets, vanes, or the like 1632 which are disposed radially outward from a rotational axis 1601 of the wheel 1630, and when impacted by the flow of water create a torque that causes the wheel 1630 to spin about its axis 1633. The wheel 1630 is configured to engage (either rigidly or through a transmission) a central hub 1638 that receives and retains the second set of bristles 1640 thereon.

The second set of bristles 1640 may each extend from a bottom surface of the hub 1638, and when the hub 1638 and second set of bristles 1640 are connected to the brush 1600, the second set of bristles 1640 extend in the same general direction that the first set of bristles 1620 extend from the bottom surface of the brush 1600. The second set of bristles 1640 may be made from a relatively soft material, such as cotton, terry cloth, and the like. Because the second set of bristles 1640 are formed from a relatively soft material, the second set of bristles 1640 are free to bend or become angled in use or during idle periods due to their own weight.

In some embodiments, the hub 1638 and the second set of bristles 1640 are removable from the brush 1600, with the second set of bristles 1640 being removable from the hub 1638. The hub 1638 includes an input 1638a, which is fixedly received by the transmission 1634, discussed below, and a flat surface 1638b opposite from the input 1638a that receives the second set of bristles 1640. The second set of bristles 1640 includes a lower substantially flat surface (opposite the extending bristles) that may include a plurality of loops 1643 scattered throughout the flat surface 1642, the loops 1643 each configured to removably connect with a plurality of hooks 1639a scattered through the flat surface 1639 of the hub 1638. The corresponding surfaces 1639, 1643 on the hub 1638 and the second set of bristles 1640, respectively, allow for a relatively strong connection to prevent relative movement during operation (i.e. with the hub 1638 and second set of bristles 1640 rotating, which allowing the second set of bristles 1640 to be easily removed from the hub 1638 for cleaning or replacement.

In some embodiments, the second set of bristles 1640 may extend beyond the ends of the first set of bristles 1630. In the embodiment shown in FIGs. 21-24, the first set of bristles 1620 are about 2.0 inches, and the hub 1638 extends about 0.5 inches from the bottom surface 1608 of the brush 1600. The second set of bristles 1640 extend about 1.0 inch from the tips 1621 of the first set of bristles 1620. Accordingly, in these embodiments, the second set of bristles 1640 contact a surface to be cleaned prior to the first set of bristles contacting the surface to be cleaned. Accordingly, the brush 1600 is useful in situations where relatively soft surfaces are to be cleaned with use of only the second set of bristles 1640 upon the surface to provide suitable mechanical agitation thereto, while additionally being useful for cleaning relatively harder or more durable surfaces with a combination of the rotating second set of bristles 1640 and the fixed first set of bristles 1620, by applying sufficient downward force to the brush 1600 to suitably compress the second set of bristles 1640. While exemplary dimensions are disclosed, it is not intended that the present invention be limited by such dimensions, and that these dimensions may be modified within the spirit of the present invention.

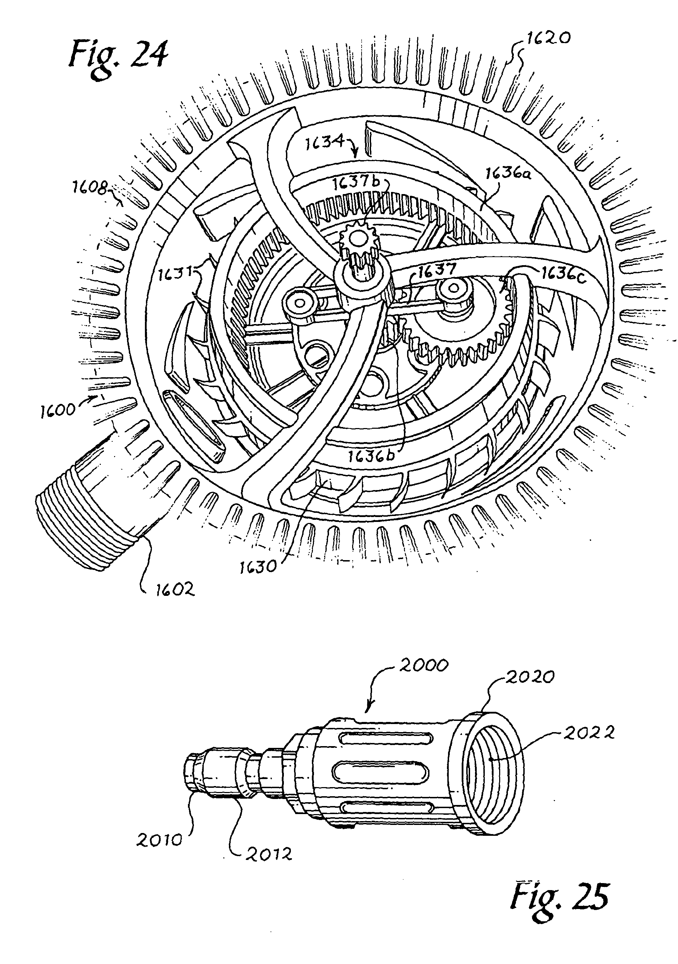

In some embodiments, the hub 1638 may be directly connected to the rotatable wheel 1630 such that the hub 1638 rotates at the same rotational velocity as the wheel 1630. In other embodiments, the hub 1638 may be connected to with the wheel 1630 with a transmission 1634, which causes the hub 1638 to rotate at a different rotational velocity (i.e. at a different speed and/or in a different rotational direction) than the wheel 1630. As shown in FIG. 24, the hub 1638 is connected to the wheel 1630 via a planetary gear train 1636, such that the rotational velocity of the hub 1638 is same as the rotational velocity that the center of the planetary gear 1636c rotates about the central axis 1601 of the brush 1600 (and the sun gear 1638a) and the sun gear 1636b is fixed to the wheel 1630. The external ring gear 1636a is fixed to the brush 1600 and does not rotate.

During operation, as the wheel 1630 rotates in a first direction W due to the torque imparted thereto by the water hitting the plurality of fins, cups, or vanes 1631, the central sun gear 1636b rotates in the same direction W. The rotation of the sun gear 1636b causes the planetary gear 1636c to rotate in the opposite direction Y due to the meshed gear connection therebetween. The rotational velocity of the planetary gear 1636c is a function of the gear ratio between the sun gear 1636b and the planetary gear 1636c. In the embodiment shown, the planetary gear 1636c rotates at a slower speed than the central sun gear 1636b because the planetary gear 1636c has less gear teeth around its circumference than the sun gear 1636b. The planetary gear 1636c is additionally meshed with the external ring gear 1636a that is fixed to the brush 1600. As the planetary gear 1636c (due to the torque received from the sun gear 1636b) rotates in the direction Y, the center of the planetary gear 1636c translates around the geared internal surface of the of the ring gear 1636b and the geared outer surface of the sun gear 1636b in the direction W. An arm 1637 is provided that is fixed to the rotational axis of the planetary gear 1637 and constrained around the rotational axis of the sun gear 1636b. The arm 1637 receives an output 1637a that is disposed coaxially with the sun gear1636b and rotates at the same rotational velocity, and in the direction W, as the center of the planetary gear's 1636c procession around the fixed ring gear 1636a and the sun gear 1638a. The output 1637a includes a spline or keyed feature that mates with the input 1638a of the hub 1638, such that the hub 1638 (and therefore the second set of bristles 1640 when attached thereto) rotates at the same rotational velocity as the arm 1637. In other embodiments, other conventional gear drives, belt drives, and the like may be used for a transmission to alter the rotational velocity of the hub 1638 with respect to the wheel 1630.

In some embodiments, the brush 1600 may include co-axial first and second connectors, such as the first and second connectors 124, 126, shown in FIG. 12 and described above. As discussed above, the first connector 124 may be a male quick connect coupler, which is configured to releasably engage a corresponding female quick connect coupler. The second connector 126 is disposed coaxially with the first connector 124 and includes male screw threads configured to engage an end of a wand, hose or the like with corresponding female threads. In other embodiments, the first and second connectors 124, 126 may be configured with other fluid connection structures as discussed elsewhere herein are as known in the art.

Turning now to FIG. 25, an adaptor 2000 is provided. The adaptor 2000 includes an inlet end 2010 configured to engage a female quick connect coupler and an outlet end 2020 that is configured to engage an inlet of an apparatus such as a nozzle, wand, brush, or the like. The adaptor 2000 provides fluid communication from a source of pressurized fluid (such as a pressure washer, through a hose, wand, or the like) to an output device configured for spraying or releasing pressurized fluid.

In some embodiments, the inlet end 2010 includes a male quick connect coupler 2012 that is configured to engage a conventional female quick connect coupler. The outlet end 2020 includes a female threaded portion 2022 that is configured to engage a similarly threaded male threaded portion that is fixed to or connected with an apparatus. For example, the outlet end 2020 is configured to engage the input 1602 of the brush 1600, best shown in FIG. 24. The input 1602 of the brush 1600 is configured as a male type connector, with a internal lumen providing fluid communication to the wheel 1630, and includes a male thread defined therein. The outlet end 2020 is configured to surround the male portion and includes a female thread to mate with the male thread of the input 1602 of the brush 1600. The adaptor 2000 is provided to allow for simple connection between pressure washer components that are configured for use with gas powered pressure washers and other components that are configured for use with electric powered pressure washers. For example, the adaptor 2000 may be used to connect a wand (such as the wand 370 shown in FIG. 11) that_includes a female quick connect coupler with a nozzle that includes a male threaded input section.

The foregoing disclosure is the best mode devised by the inventors for practicing this disclosure. It is apparent, however, that apparatus incorporating modifications and variations will be obvious to one skilled in the art. Inasmuch as the foregoing disclosure is intended to enable one skilled in the pertinent art to practice the instant disclosure, it should not be construed to be limited thereby but should be construed to include aforementioned obvious variations and be limited only by the spirit and scope of the following claims.

It is therefore intended that the foregoing detailed description be regarded as illustrative rather than limiting, and that it be understood that it is the following claims, including all equivalents, that are intended to define the spirit and scope of this disclosure.

## Claims

1. A spray apparatus for a pressure washer comprising:
an adaptor having an input to receive a flow of pressurized fluid through a conduit fluidly connected with a pressure washer and a first output and a second output from which the fluid exits the adaptor; and
a multi-position valve movably connected with the adaptor and positionable in a plurality of discrete positions, wherein the valve is selectively positioned to direct the pressurized fluid to flow through one of the first or the second output.

2. The spray apparatus of claim 1, wherein the pressurized fluid is received at the input of the adaptor at a pressure dependent on the position of the valve.

3. The spray apparatus of claim 1 or 2, further comprising a source of cleaning solution fluidly connected with the conduit and configured to selectively mix with the flow of pressurized fluid depending on the position of the valve.

4. The spray apparatus of claim 3, further comprising a venturi fluidly connecting the flow of pressurized fluid with the source of cleaning solution.

5. The spray apparatus of any one of the preceding claims, wherein the valve is a four position valve, the valve being movable to a first position significantly impeding a flow of pressurized fluid therethrough;
the pressure of the fluid flowing through the adaptor being above a threshold pressure when the valve is in the first position; and the adaptor is configured to allow flow through the first output when the valve is in the first position.

6. The spray apparatus of claim 5 , wherein the valve is movable to a second position substantially allowing the flow of pressurized fluid therethrough wherein the pressure of the fluid flowing through the adaptor is below a threshold pressure when the valve is in the second position.

7. The spray apparatus of claim 6, wherein the valve is movable to a third position substantially allowing flow of pressurized fluid through the adapter and the second output.

8. The spray apparatus of claim7, wherein the valve is movable to a fourth position substantially allowing flow of pressurized fluid through the adaptor and through the second output.

9. The spray apparatus of any one of the preceding claims, wherein the second output is configured to receive a cleaning tool.

10. A spray apparatus for a pressure washer comprising:
a source of pressurized fluid;
a valve fluidly connected to a conduit for receiving the source of pressurized fluid;
a first output fluidly connectable with the pressurized fluid;
a second output fluidly connectable with the pressurized fluid, wherein the second output is operable with a cleaning tool, and wherein the valve is configured to be switched between a first position where the pressurized fluid flows through the first output and to a second position where the pressurized fluid flows through the second output.

11. The spray apparatus of claim 10, wherein the valve is configured to adjust the pressure of the pressurized fluid flowing through the conduit between a relatively high pressure above a threshold pressure and a relatively low pressure below the threshold pressure.

12. The spray apparatus of claim 10 or 11, further comprising a source of cleaning solution fluidly connected with the source of pressurized fluid,
wherein the source of cleaning fluid is configured to substantially flow with the source of pressurized fluid when the pressurized fluid is below the threshold pressure and substantially prevent the source of cleaning fluid from flowing with the source of pressurized fluid when at or above the threshold pressure.

13. The spray apparatus of any one of claims 10 to 12, wherein the valve comprises a first valve in series with a second valve, wherein the first valve is configured to adjust the pressure of the source of pressurized fluid, and the second valve is adjustable to fluidly connect the source of pressurized fluid with one of the first output or the second output, and the second valve is configured to fluidly connect the source of pressurized fluid with both the first output and the second output simultaneously.

14. A fluid outlet device for a pressure washer comprising:
a housing with an inlet portion, an outlet portion, and defining a fluid flow path therethrough between the inlet and the outlet portion;
the inlet portion further comprising a first connector and a coaxial independent second connector.

15. The fluid outlet device of claim 14 , wherein an outer diameter of the second connector is greater than an outer diameter of the first connector, and the second connector is a first threaded connector, and the second connector is configured to engage an adaptor with a corresponding second threaded connector on an end of the adaptor, wherein the second threaded connector is opposite the first threaded connector.

16. The fluid outlet device of claim 15, wherein the adaptor comprises an adaptor inlet portion and an adaptor outlet portion with an adaptor lumen defined therethrough, wherein the adaptor outlet portion supports the second threaded connector, and the first connector extends within the adaptor lumen when the second threaded connector engages the second connector, and the first connector does not contact the adaptor lumen when the second threaded connection engages the second connector.

17. The fluid outlet device of any one of claims 15 to 16, wherein the adaptor is configured to removeably engage a wand, and the adaptor comprises an inlet connector on an adaptor inlet portion that is removeably connectable with the wand.

18. The fluid outlet device of anyone of claims 14 to 17, further comprising a shroud surrounding the housing, wherein the shroud is configured to be relatively movable with respect to the housing, wherein the housing and the shroud are configured to alter a flow of fluid from the outlet portion of the housing when one of the shroud and the housing are moved with respect to the other of the shroud and the housing.

19. The fluid outlet device of anyone of claims 14 to 18, wherein the fluid outlet device is one of a nozzle a surface cleaner, a rotating brush, a fixed brush, or a roller.

20. A fluid outlet device for a pressure washer comprising:
a hollow longitudinal member with an inlet portion and an outlet portion configured to allow a flow of high pressure liquid to flow therefrom;
wherein the inlet portion comprises a first connector and a second connector, with the first and second connectors configured to be independently engaged to receive a liquid flow from a pressure washer.

21. The fluid outlet device of claim 20, wherein the first connector is a male quick connect plug, and wherein the second connector is a rotatable connection portion, and an outer diameter of the rotatable connection portion is greater than an outer diameter of the male quick connect plug, and the rotatable connection portion is configured to engage an adaptor with an opposing rotatable connection portion to the rotatable connection portion.

22. A fluid outlet device for pressurized fluid flow comprising:
an inlet configured to receive a flow of liquid;
a fixed portion configured to selectively contact a surface to be cleaned; and
a rotating portion configured to contact the surface to be cleaned prior to the fixed portion contacting the surface when the device is oriented in a normal operational position.

23. The fluid outlet device of claim 22, wherein the fixed portion and rotating portion each comprise a plurality of bristles.

24. The fluid outlet device of claim 22 or 23, further comprising a wheel with a plurality of fins configured to receive the flow of liquid, wherein the rotating portion is rotatably connected with the wheel.

25. The fluid outlet device of claim 24, wherein the rotating portion is rotatably connected with the wheel with a planetary gear system, and wherein the rotating portion is fixed to a planetary gear of the planetary gear system,
wherein a sun gear is fixed to the wheel, and a ring gear is fixed to the fixed portion, wherein a center of the planetary gear translates around the sun gear as the wheel is rotated.

26. A monolithic connector for pressurized fluid flow comprising:
an input portion comprising a male quick connect coupler;
an output portion comprising a female threaded portion; and
an internal hollow portion configured for fluid flow through the connector from the input portion to the output portion.
